# EUROPÄISCHE PATENTSCHRIFT

(11) **EP 3 770 456 B1**
(45) Veröffentlichungstag und Bekanntmachung des Hinweises auf die Patenterteilung: **02.03.2022**
(21) Anmeldenummer: 20184653.2
(22) Anmeldetag: 08.07.2020
(51) Int. Cl.: F16D 55/226, F16D 65/18

(54) **ELEKTROMECHANISCHER AKTUATOR**
ELECTROMECHANICAL ACTUATOR
ACTIONNEUR ÉLECTROMÉCANIQUE

(30) Priorität: 23.07.2019 DE 102019119839
(43) Veröffentlichungstag der Anmeldung: 27.01.2021
(73) Patentinhaber: ZF CV Systems Global GmbH, 3006 Bern (CH)
(72) Erfinder: HACKSPACHER, Colin, 68519 Viernheim (DE); KLOOS, Eugen, 68519 Viernheim (DE)
(74) Vertreter: Rabe, Dirk-Heinrich

(56) Entgegenhaltungen:
- EP-A1- 2 878 848
- DE-A1-102006 039 984
- KR-A- 20030 093 690
- US-A1- 2005 029 858

## Beschreibung

Die Erfindung betrifft einen elektromechanischen Aktuator für eine Scheibenbremse. Elektromechanische Aktuatoren sind hinlänglich bekannt. Aktuelle Entwicklungen im Bereich der Nutzfahrzeugscheibenbremsen gehen hin zu elektromechanischen Aktuatoren mit einer Kurvenscheibe.

Die DE102017004436A1 zeigt einen solchen elektromechanischen Aktuator mit einer Kurvenscheibe. Die Kurvenscheibe ist rotatorisch beweglich auf einer Betätigungswelle gelagert und wird über einen Elektromotor angetrieben, wobei der Elektromotor ein Antriebsmoment erzeugt. Ein sogenannter Bremsstößel ist mit der Kurvenscheibe und einem Drehhebel der Scheibenbremse wirkverbunden. Die Kurvenscheibe wandelt zur Aktuierung des Drehhebels die rotatorische Bewegung der Betätigungswelle in eine translatorische Bewegung um, wobei der Drehhebel eine Bremsscheibe über eine Druckplatte und zwei Bremsbeläge zuspannt. Mittels einem, mit der Betätigungswelle wirkverbundenen Getriebe kann die Untersetzung des Antriebsmoments, und damit die lineare Zustellbewegung des Bremsstößels variiert werden.

Ein weiterer elektromechanischer Aktuator ist in der US200050029858A1 und in der KR20030093690A offenbart. Der elektromechanische Aktuator weist einen Elektromotor und ein Getriebe zum Erzeugen eines Antriebsmoments und einer mit dem Elektromotor wirkverbundenen rotatorisch beweglich gelagerten Betätigungswelle auf. Ein Zahnstangengetriebe ist zur Betätigung eines Kolbens und zum Zuspannen von Bremsbelägen gegen eine Bremsscheibe mit der Betätigungswelle wirkverbunden.

Nachteilig sind die hohe Anzahl an Bauteilen, insbesondere durch die Kurvenscheibe, dem zusätzlichen Getriebe, und die damit verbundene Bauteilgröße des elektromechanischen Aktuators. Die Bauteilgröße führt wiederum insbesondere zu Problemen beim Einbau des elektromechanischen Aktuators in eine Vorderachse oder in eine Hinterachse eines Fahrzeugs. Darüber hinaus können Elektromotoren nur ein geringes Antriebsdrehmoment aufbringen. Zum Zuspannen der Bremsscheibe sind allerdings hohe Zuspannkräfte notwendig. Das heißt, dass zum Zuspannen der Bremsscheibe mit dem geringen Antriebsmoment ein Getriebe mit einer großen Untersetzung erforderlich ist. Eine große Untersetzung hat allerdings zur Folge, dass die Aktuierungszeit, also die Zeit zum Zuspannen der Bremsscheibe, größer ist als bei einem Getriebe mit einer kleinen Untersetzung.

Aufgabe der Erfindung ist es, einen kompakt bauenden elektromechanischen Aktuator bereit zu stellen.

Gelöst wird die Aufgabe dadurch, dass der elektromechanische Aktuator entlang einer axialen Achse ein stufenlos einstellbares Zahnstangengetriebe zur Betätigung eines Drehhebels einer Scheibenbremse aufweist und mit einer Betätigungswelle des elektromechanischen Aktuators wirkverbunden ist. Ein mit der Betätigungswelle wirkverbundener Antrieb, insbesondere ein Elektromotor, versetzt die Betätigungswelle in eine rotatorische Bewegung, wobei die rotatorische Bewegung auf das Antriebszahnrad übertragen wird. Weiterhin weist zum Einlegen einer Parksperre das Zahnstangengetriebe gegenüber einem elektromechanischen Aktuator mit einer Kurvenscheibe den Vorteil auf, das zum Beginn eines Bremsvorgangs eine schnelle lineare Zustellbewegung mit einem hohen Antriebsmoment der Bremsscheibe über die Bremsbeläge erfolgt und mit zunehmender Zustellbewegung das Antriebsmoment abnimmt. Es ist also ein Motor mit einem geringeren Drehmoment zum Aufbringen einer Zuspannkraft notwendig. Als Zuspannkraft ist die aufzubringende Kraft des elektromechanischen Aktuators zum Zuspannen der Bremsscheibe über die Bremsbeläge definiert.

Das Zahnstangengetriebe umfasst erfindungsgemäß eine Zahnstange und ein mit der Zahnstange wirkverbundenes Antriebs-zahnrad. Die Zahnstange setzt eine Drehbewegung des Antriebszahnrads in eine Linearbewegung, also in eine translatorische Bewegung um, wodurch der Drehhebel der Scheibenbremse in eine Drehbewegung entlang einer axialen Achse der Zahnstange versetzt wird und eine Bremsscheibe zumindest über eine Druckplatte und Bremsbeläge zuspannt. Die Bewegung der Zahnstange in Richtung der Bremsscheibe wird als Zuspannbewegung bezeichnet. Während einer Rückstellbewegung, also einer entgegengesetzt der Zuspannbewegung gerichteten axialen Bewegung der Zahnstange, wird durch das Antriebszahnrad die lineare Bewegung der Zahnstange in eine Drehbewegung umgewandelt, wodurch die Bremsbeläge von der Bremsscheibe gelöst werden.

Die Betätigungswelle ist, bezogen auf eine Antriebszahnradachse des Antriebszahnrades, erfindungsgemäß versetzt an dem Antriebszahnrad angeordnet. Die versetzt an dem Antriebszahnrad angeordnete Betätigungswelle erzeugt zu Beginn des Zuspannvorgangs eine kleine Untersetzung, wobei die Untersetzung mit einer zunehmenden Zuspannkraft zunimmt. Die Zuspannkraft einer Scheibenbremse eines Nutzfahrzeugs beträgt für Anpassungsbremsungen gewöhnlich 30.000 N. Die Zuspannkraft für Vollbremsungen beträgt gewöhnlich mindestens 200.000 N. Die aufzubringende Zuspannkraft variiert je nach Fahrzeug und Scheibenbremsentyp. Zum Einlegen einer Parksperre sind im Mittel Antriebsmomente von etwa 140 Nm erforderlich. Auch die Zuspannkräfte können je nach Fahrzeug und Scheibenbremsentyp abweichen. Die versetzt angeordnete Betätigungswelle reduziert das Antriebsmoment im Mittel um 25 %. Das heißt, dass sich ein erforderliches Antriebsmoment zum Zuspannen einer Bremssscheibe von 185 Nm auf 140 Nm reduziert. Zudem reduziert sich das aufzubringende Antriebsmoment zum Einlegen der Parksperre von 135 Nm bis 140 Nm im Mittel auf 100 Nm. Erreicht wird die Verringerung der Antriebsmomente zum Einlegen der Parksperre durch ein Antriebsmo-mentenplateau. Ein Steuersystem erkennt über Sensoren das erforderliche Antriebsmoment zum Zuspannen der Parksperre. Die Zuspannkraft und das Antriebsmoment verlaufen bis zum Erreichen des erforderlichen Antriebsmoments zum Zuspannen der Parksperre in etwa parallel. Sobald das erforderliche Antriebsmoment erreicht worden ist, bleibt das Antriebsmoment in einem Drehwinkelabschnitt des Antriebszahnrads etwa gleich, wobei die Zuspannkraft linear weiter ansteigt.

Der Versatz der Betätigungswelle wird in einer weiteren Ausgestaltung dadurch erreicht, dass das Antriebszahnrad in Richtung der Antriebszahnradachse einen zylinderförmigen Durchgang zur Aufnahme der Betätigungswelle aufweist. Der Abstand zwischen den, bezogen auf die Antriebszahnradachse, radialen Begrenzungen des zylinderförmigen Durchgangs ist größer als der Abstand zwischen den axialen Begrenzungen des zylinderförmigen Durchgangs. Der zylinderförmige Durchgang ermöglicht eine variable Anpassung der Untersetzung des Antriebszahnrads, und damit der Anpassung des Antriebsmoments.

In einer weiteren vorteilhaften Ausgestaltung weist die Zahnstange, bezogen auf die axiale Achse, radial, auf der dem Antriebszahnrad gegenüberliegenden Seite der Zahnstange, eine federbelastete Rolle auf. Die federbelastete Rolle gleicht, bezogen auf die axiale Achse der Zahnstange, eine radiale Bewegung der Zahnstange aus. Eine radiale Bewegung der Zahnstange entsteht unter anderen während einer Zustellbewegung oder einer Rückstellbewegung des Zahnstangengetriebes. Die federbelastete Rolle ist radial unterhalb des Antriebszahnrads an der Zahnstange angeordnet. Die federbelastete Rolle stützt sich daher an der Zahnstange ab, damit die Zahnstange und das Antriebszahnrad dauerhaft wirkverbunden sind und das Aufbringen der vollständigen Bremskraft zum Zuspannen der Bremsscheibe gewährleistet ist. Die federbelastete Rolle verhindert also eine Unterbrechung der Linearbewegung der Zahnstange, aufgrund einer der Zahnstange radial entgegengesetzten Bewegung des Antriebszahnrads.

Zur Vermeidung einer Unterbrechung der Linearbewegung der Zahnstange, weist in einer alternativen Ausgestaltung die Zahnstange des Zahnstangengetriebes, bezogen auf die axiale Achse, radial auf der dem Antriebszahnrad gegenüberliegenden Seite der Zahnstange eine Stützrolle auf und die Zahnstange weist auf der dem Antriebszahnrad gegenüberliegenden Seite der Zahnstange eine Kurvenbahn auf, wobei sich die Stützrolle entlang der Kurvenbahn abstützt. Die Kurvenbahn steigt während eines Zuspannvorgangs der Scheibenbremse oder eines Rückstellvorgangs der Scheibenbremse, ausgelöst durch eine Drehbewegung des Drehhebels und einer damit verbundenen Radialbewegung der Zahnstange, leicht an.

In einer weiteren Ausgestaltung ist das Antriebszahnrad kreisförmig ausgebildet und das Antriebszahnrad weist in einem Verdrehwinkel von 30 Grad bis 300 Grad Zähne auf. Die Zähne greifen in Zahnabstände der Zahnstange ein. Die nicht mit Zähnen besetzte Fläche des Antriebszahnrads definiert einen Grenzbereich, also eine maximale Auslegung des Drehhebels durch die Zahnstange und eine minimale Auslegung des Drehhebels durch die Zahnstange.

Die Zähne des Antriebszahnrads und die Zähne der Zahnstange sind in einer Weiterbildung sägezahnförmig ausgebildet. Dabei sind die schrägen Flanken der Zähne der Zahnstange in Richtung des Drehhebels gerichtet. Die schrägen Flanken des Antriebszahnrads sind entgegengesetzt der Richtung des Drehhebels an dem Antriebszahnrad angeordnet. Während einer Zustellbewegung stützen sich die in Eingriff stehenden radialen Flanken der Zähne der Zahnstange an den radialen Flanken des Antriebszahnrads ab und eine axiale Linearbewegung in Richtung des Drehhebels erfolgt. Die Anordnung erlaubt eine Übertragung von Antriebsmomenten mit einer Kraft von mindestens 100 Nm.

In einer weiteren Ausgestaltung sind die Zähne der Zahnstange konisch, also kegelförmig, ausgebildet. Die Zähne nehmen in ihrer Dimensionierung, entgegengesetzt der Richtung des Drehhebels, zu. Die Zähne werden daher entlang einer horizontalen Achse in ihrer Dimensionierung breiter. Die konische Geometrie der Zähne auf der Zahnstange verringert Spannungen an den Zähnen der Zahnstange und an den Zähnen des Antriebsrads bei hohen Antriebsmomenten, oder anders ausgedrückt, sobald die Bremsbeläge an der Bremsscheibe anliegen und weiter zugespannt werden, entstehen hohe Antriebsmomente. Zusätzlich dient die konische Ausgestaltung der Zahnstange dazu, dass die Zahnstange zur Betätigung des Drehhebels mit ihrer stirnseitig schmalsten Abmessung durch eine Öffnung des Aktuatorgehäuses passt.

In einer weiteren Ausgestaltung weist die Zahnstange eine Aufnahme zur Betätigung des Drehhebels auf. Die Aufnahme ist stirnseitig an der Zahnstange angeordnet und kugelförmig ausgebildet. Die Aufnahme wirkt gleichzeitig als Drehgelenk zum Ausgleich von Kippbewegungen des Drehhebels.

In einer letzten Ausgestaltung ist das Antriebszahnrad dazu ausgebildet in einem Verdrehwinkel zwischen 0 Grad bis 60 Grad ein Lüftspiel der Scheibenbremse zu überbrücken und in einem Winkel zwischen 30 Grad und 250 Grad eine Scheibenbremse zuzuspannen oder eine Scheibenbremse in einem Winkel zwischen 30 Grad und 250 Grad in einer Parksperrposition zu halten. Das Antriebszahnrad überbrückt mit einer kleinen Untersetzung des Zahnstangengetriebes das Lüftspiel der Scheibenbremse zwischen einem Verdrehwinkel von 0 Grad bis 30 Grad, ohne eine Zuspannkraft aufzubringen. Die Überbrückung des Lüftspiels der Scheibenbremse kann je nach Fahrzeug und Scheibenbremse bis zu einem Verdrehwinkel von 60 Grad des Antriebszahnrads variieren. Das Antriebszahnrad hat daher zu Beginn eines Bremsvorgangs eine Ausgangstellung zwischen 30 Grad und 60 Grad, wobei das Zahnstangengetriebe in dem Bereich zwischen 30 Grad und 90 Grad die niedrigste Untersetzung aufweist. Bis zu einem Verdrehwinkel des Antriebszahnrads von 210 Grad weist das Zahnstangengetriebe eine relativ kleine Untersetzung auf. Das heißt, dass das Zahnstangengetriebe für einen Anpassungsbremsvorgang einen kleinen Verdrehwinkel bei einer kleinen Untersetzung aufweist. Bis zu einem Verdrehwinkel von 210° gleitet die Untersetzung auf ihren Größtwert. Im Bereich der Parksperre heben sich Zunahme der Zuspannkraft und Zunahme der Untersetzung nahezu auf. So dass das Antriebsmoment nur gering ansteigt.

Im Falle einer Notbremsung eines Fahrzeugs, weist das Antriebszahnrad über einen Verdrehwinkel zwischen 180 Grad bis 270 Grad zum Aufbringen der erforderlichen Zuspannkräfte eine große Untersetzung auf. Als Zuspannkraft ist die Kraft definiert, die erforderlich ist, um eine Bremsscheibe über Bremsbeläge der Scheibenbremse abzubremsen. Nachfolgend werden ausgewählte Ausführungsbeispiele der Erfindung anhand der beigefügten Figuren erläutert.

Nachfolgend werden ausgewählte Ausführungsbeispiele der Erfindung anhand der beigefügten Figuren erläutert.

Es zeigt:
Fig. 1 eine Scheibenbremse mit einem elektromechanischen Aktuator mit einem Zahnstangengetriebe aus einer seitlich gedrehten Ansicht,
Fig. 2 eine schematische Ansicht eines Zahnstangengetriebes mit einer federbelasteten Rolle,
Fig. 3 eine schematische Ansicht eines Zahnstangengetriebes mit einer Kurvenbahn,
Fig. 4 eine Draufsicht eines schematisch dargestellten Zahnstangengetriebes,
Fig. 5 eine Detailansicht eines Zahneingriffs des Zahnstangengetriebes mit Zähnen in Sägezahnform,
Fig. 6 bis Fig. 7 grafische Darstellungen des elektromechanischen Aktuators mit einer Zahnstange und einem Antriebszahnrad mit einem Versatz,
Fig. 8 eine grafische Darstellung des elektromechanischen Aktuators mit einer Zahnstange und einem Antriebszahnrad ohne einen Versatz,

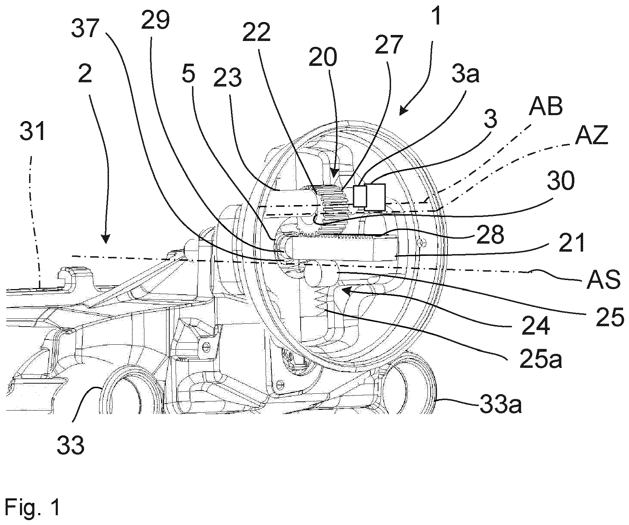

In Fig. 1 ist ein elektromechanischer Aktuator 1 mit einer Scheibenbremse 2 gezeigt. Die Scheibenbremse 2 weist, axial, entlang einer Scheibenbremsenachse AS, einen Bremssattel 31 auf. Der Bremssattel 31 ist über zwei Führungsbuchsen 33, 33a an einem nicht gezeigten Bremsträger gleitend gelagert. Der elektromechanische Aktuator 1 ist an dem Bremssattel 31 angeflanscht und spannt eine nicht gezeigte Bremsscheibe über einen Drehhebel 5, einer nicht gezeigten Druckplatte und zwei nicht gezeigten Bremsbelägen zu. Der elektromechanische Aktuator 1 weist einen Elektromotor 3 mit einem Getriebe 3a zum Erzeugen eines rotatorischen Antriebsmoments auf. Ein Zahnstangengetriebe 20 wandelt die rotatorische Bewegung des Elektromotors 3 in eine translatorische Bewegung um. Zur Umwandlung von einer rotatorischen Bewegung in eine translatorische Bewegung weist das Zahnstangengetriebe 20 eine Zahnstange 21, einem Antriebszahnrad 22 und einer Betätigungswelle 23 auf. Die Zahnstange 21 ist axial, in Bezug auf eine Axiale Achse A der Zahnstange 21, über eine Aufnahme 29 der Zahnstange 21 mit dem Drehhebel 5 wirkverbunden. Die Aufnahme 29 der Zahnstange 21 entspricht einem Kugelkopf 29, wobei der Kugelkopf 29 in eine Ausnehmung 37 des Drehhebels 5 angeordnet ist. Der Kugelkopf 29 und die Ausnehmung 37 des Drehhebels 5 bilden zusammen ein Lager und gleichen die Drehbewegung des Drehhebels 5 aus. Das Zahnstangengetriebe 20 wird über die mit dem Elektromotor 3 wirkverbundene Betätigungswelle 23 in Bewegung versetzt. Die Betätigungswelle 23 greift durch einen zylinderförmigen Durchgang 30 des Antriebszahnrads 22, wobei die Betätigungswelle 23 die rotatorische Bewegung auf das Antriebszahnrad 22 überträgt. Die Betätigungswelle 23 und das Antriebszahnrad 22 sind bezogen auf eine Antriebszahnradachse AZ des Antriebszahnrads 22 und eine Betätigungswellenachse AB der Betätigungswelle 23 versetzt zueinander angeordnet. Zur Übertragung der rotatorischen Bewegung des Antriebszahnrads 22 auf eine translatorische Bewegung der Zahnstange 21 weist das Antriebszahnrad 22 an der Umfangsfläche Zähne 27 auf. Die Zähne 27 des Antriebszahnrads 22 greifen in eine Verzahnung 28 der Zahnstange 21. Das Zahnstangengetriebe 20 weist darüber hinaus an der dem Antriebszahnrad 22 gegenüberliegenden Seite der Zahnstange 21 eine federbelastete Rolle 24 auf. Die federbelastete Rolle 24 setzt sich aus einer Stützrolle 25 und einer Feder 25a zusammen. Die Feder 25a ist vorgespannt und drückt die Stützrolle 25 radial gegen die Zahnstange 21. Die federbelastete Rolle 24 gleicht während einer Zuspannbewegung oder einer Rückstellbewegung der nicht gezeigten Bremsbeläge eine radiale Bewegung der Zahnstange 21 aus, wodurch die Zähne 27 des Antriebszahnrads 22 im dauerhaften Eingriff mit der Verzahnung 28 der Zahnstange 21 stehen.

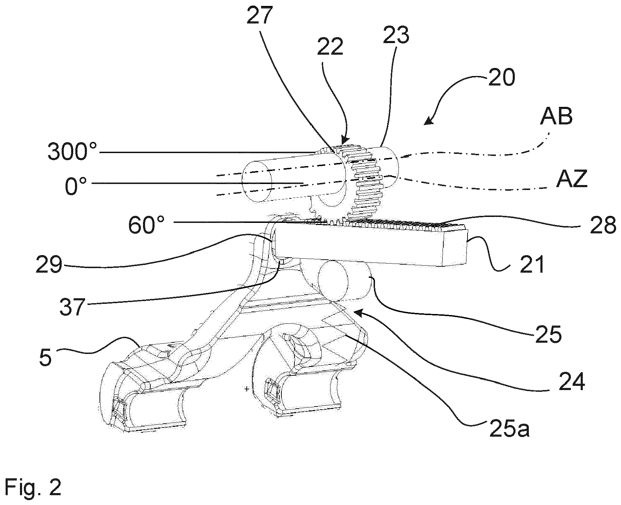

In Fig. 2 ist das Zahnstangengetriebe 20 mit der federbelasteten Rolle 24 nach Fig. 1 noch einmal im Detail gezeigt. Vor allem verdeutlicht Fig. 2 die Funktionsweise des Zahnstangegetriebes 20. Das Antriebszahnrad 22 ist in der Umfangsfläche nicht vollständig kreisrund. In Figur 2 ist das Antriebszahnrad 22 in einem Verdrehwinkel von 0 Grad bis 270 Grad kreisrund und mit Zähnen 27 besetzt. Eine erste kleine Untersetzung des Zahnstangengetriebes 20 wird durch den Versatz der Betätigungswellenachse AB der Betätigungswelle 23 und der Antriebszahnradachse AZ des Antriebszahnrads 22 erreicht. Das Antriebszahnrad 22 befindet sich in einer Ausgangsstellung mit einem Verdrehwinkel von 60 Grad. Ein Verdrehwinkelbereich des Antriebszahnrads 22 von 0 Grad bis 60 Grad dient der Überbrückung eines Lüftspiels der Scheibenbremse 2. Bei einem Verdrehwinkel von 60 Grad des Antriebszahnrads 22 weist das Zahnstangengetriebe 20 die kleinste Untersetzung auf. Nach einer Drehbewegung des Antriebszahnrads 22 in einem Verdrehwinkel zwischen 180 Grad bis 270 Grad ist die größtmögliche Untersetzung des Zahnstangengetriebes 20 erreicht. Der Drehhebel 5 bewegt sich innerhalb einer 180 Grad Bewegung der Betätigungswelle 23 von einer minimalen Auslenkung des Drehhebels 5 hin zu einer maximalen Auslenkung des Drehhebels 5. Zusätzlich ist die Stellung des Antriebszahnrads 22 und der des Drehhebels 5 so ausgelegt, dass der Drehhebel 5 nach einer Rotation der Betätigungswelle 23 um 45 Grad, die minimale Auslenkung erreicht und das der Drehhebel 5 nach einer Rotation der Betätigungswelle 23 um 210 Grad die maximale Auslenkung erreicht.

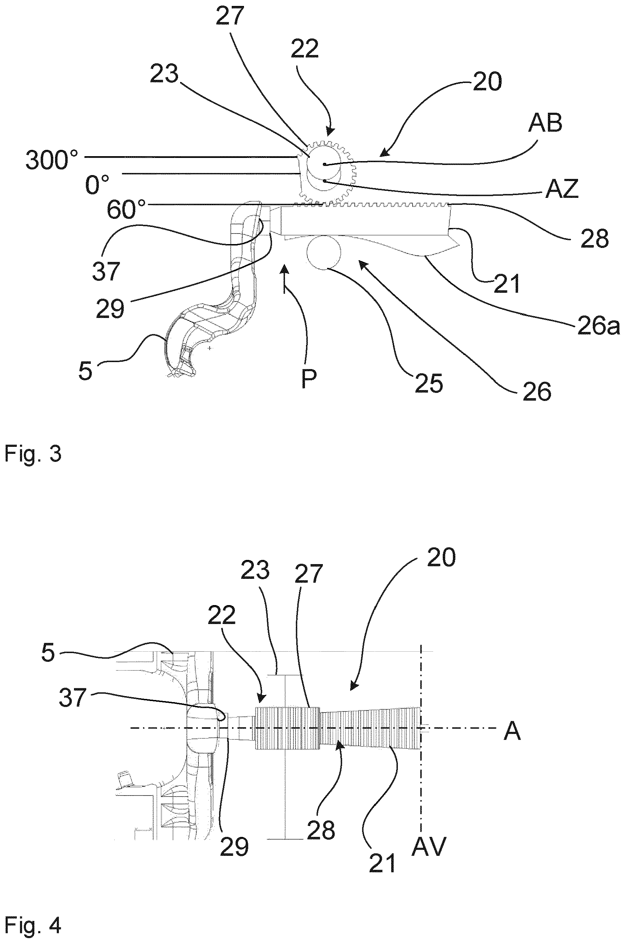

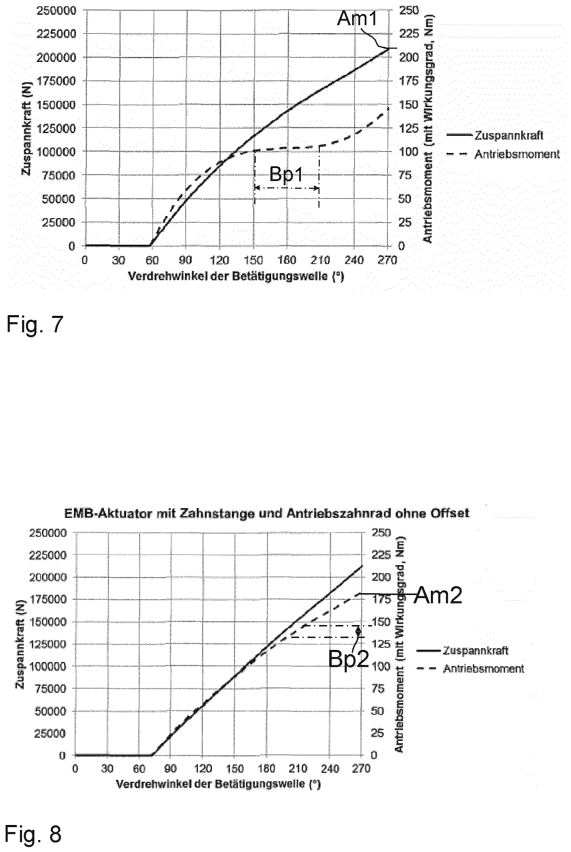

In Fig. 3 ist das Zahnstangengetriebe 20 nach Figur 1 und Figur 2 in einer zweiten Ausführung gezeigt. Das Zahnstangengetriebe 20 weist entgegen der Fig. 1 und Fig. 2 keine federbelastete Rolle 24, sondern eine Kurvenbahn 26 auf. Mit zunehmender Auslenkung des Drehhebels 5 und der Zunahme einer Zuspannkraft (s. Fig. 7) des elektromechanischen Bremsaktuators 1 (Fig. 1) steigt die Kurve 26a der Kurvenbahn 26 an, wodurch über die Stützrolle 25 auf die Zahnstange 21 ein Druck P zur Verhinderung einer radialen Bewegung der Zahnstange 21, entgegen der Richtung des Antriebszahnrads 22, ausgeübt wird.

Fig. 4 zeigt das Zahnstangengetriebe 20 aus der Draufsicht nach den Figuren 1 bis 3. Deutlich sichtbar ist, sowohl die Zahnstange 21, als auch die Verzahnung 28 der Zahnstange 21 sind konisch in Richtung des Drehhebels 5 geformt, wodurch Spannungen an den Zähnen 27 des Antriebszahnrads 22 und Spannungen an der Verzahnung 28 der Zahnstange 21 während einer Drehbewegung des Antriebszahnrads 22 minimiert werden. Die Breite der Verzahnung 28 nimmt in Richtung einer vertikalen Achse AV zu.

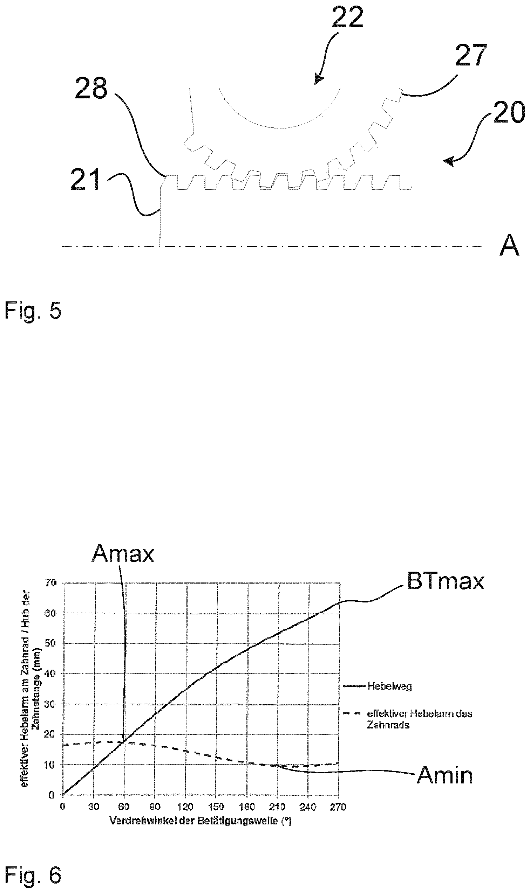

Fig. 5 zeigt die Zähne 27 des Antriebszahnrads 22 nach den Figuren 1 bis 4 und die Verzahnung 28 der Zahnstange 21 nach den Figuren 1 bis 4 im Detail. Sowohl die Zähne 27 des Antriebszahnrads 22, als auch die Verzahnung 28 der Zahnstange 21 sind sägezahnförmig ausgestaltet. Die sägezahnförmige Ausgestaltung der Zähne 27 des Antriebszahnrads 22 und der Verzahnung 28 der Zahnstange 21 minimieren Querkräfte im Zahnstangengetriebe 20, welche durch die federbelastete Rolle 24 oder der Kurvenbahn 26 ausgelöst werden.

Die Figuren 6 und 7 zeigen eine Grafiken eines elektromechanischen Aktuators 1 nach Fig. 1 mit einer Zahnstange 21, sowie einem Antriebszahnrad 22 mit einem Versatz nach den Figuren 1 bis 5. Das Antriebszahnrad 22 ist als Zahnrad 22 bezeichnet. In Fig. 6 ist eine Situation gezeigt, bei der das Antriebszahnrad 22 einen Durchmesser von 27 mm und einen Versatz der Antriebszahnradachse AZ in Bezug auf die Betätigungswellenachse AB der Betätigungswelle 23 von 4 mm aufweist. Ein maximaler Verdrehwinkel Amax des Drehhebels 5 von 17,5 mm wird bei einem Verdrehwinkel der Betätigungswelle 23 von 45 Grad erreicht. Nach einer Rotation der Betätigungswelle 23 um 225 Grad erreicht der Drehhebel 5 einem minimalen Verdrehwinkel Amin von 9,5 mm. Die maximale translatorische Bewegung BTmax der Zahnstange 21 beträgt 65 mm bei einem Verdrehwinkel der Betätigungswelle 23 von 270 Grad. Der Zusammenhang zwischen dem Hub der Zahnstange 21, also der translatorischen Bewegung, der Zuspannkraft und dem Antriebsmoment an der Betätigungswelle 23 ist in Fig. 7 gezeigt. Ab einem Verdrehwinkel des Antriebszahnrads 22 von 60 Grad steigt die Zuspannkraft bezogen auf das Antriebsmoment bis zu einem Verdrehwinkel von 120 Grad in etwa linear an. Bei dem Verdrehwinkel von 120 Grad weist der elektromechanische Aktuator 1 eine Zuspannkraft von 100.000 N und ein Antriebsmoment von 100 Nm auf. In dem Bereich von 60 Grad bis 120 Grad des Antriebszahnrads 22 spannt der elektromechanische Bremsaktuator 1 die Bremsscheibe zu. Als Bereich Bp1 zum Einlegen einer Parksperre der Scheibenbremse 1 (s. Figur 1) ist der Bereich Bp1 mit einem Antriebsmoment von etwa 100 Nm und einem Drehwinkel von etwa 150 Grad bis 210 Grad definiert. Die Zuspannkraft steigt auch im Bereich Bp1 zum Einlegen der Parksperre weitestgehend linear weiter an. Zum vollständigen Einlegen der Parksperre liegt ein Antriebsmoment Am von 100 Nm an der Betätigungswelle 23 an. Die maximale Zuspannkraft wird bei einem Antriebsmoment von 140 Nm erreicht.

Figur 8 zeigt die Grafik nach Figur 7, jedoch ohne einen Versatz der Antriebszahnradachse AZ in Bezug auf die Betätigungswellenachse AB der Betätigungswelle 23. Gut zu erkennen ist, dass das Antriebsmoment Am2 an der Betätigungswelle 23 185 Nm, anstatt nach Fig. 7 140 Nm beträgt. Zudem ist der Bereich Bp2 zum Einlegen der Parksperre zwischen 135 Nm und 140 Nm deutlich höher als der Bereich Bp1 von 100 Nm zum Einlegen der Parksperre eines elektromechanischen Bremsenaktuators 1 nach Fig. 7.

### Bezugszeichenliste (Bestandteil der Beschreibung)

- 1: Elektromechanischer Aktuator
- 2: Scheibenbremse
- 3: Elektromotor
- 3a: Getriebe
- 5: Drehhebel
- 20: Zahnstangengetriebe
- 21: Zahnstange
- 22: Antriebszahnrad
- 23: Betätigungswelle
- 24: federbelastete Rolle
- 25: Stützrolle
- 25a: Feder
- 26: Kurvenbahn
- 26a: Kurve der Kurvenbahn 26
- 27: Zähne
- 28: Verzahnung der Zahnstange 21
- 29: als Kugelkopf ausgebildete Aufnahme der Zahnstange 21
- 30: zylinderförmiger Durchgang des Antriebszahnrads 29
- 31: Bremssattel
- 33, 33a: Führungsbuchsen
- 37: Ausnehmung des Drehhebels 5
- A: axiale Achse der Zahnstange 21
- AB: Betätigungswellenachse
- Am1, Am2: Antriebsmomente an der Betätigungswelle 23
- Amin: minimaler Verdrehwinkel der Betätigungswelle 23
- Amax: maximaler Verdrehwinkel der Betätigungswelle 23
- AS: Scheibenbremsenachse
- AV: vertikale Achse der Zahnstange 21
- AZ: Antriebszahnradachse
- Bp1, Bp2: Bereiche zum Einlegen einer Parksperre der Scheibenbremse 1
- BTmax: maximale translatorische Bewegung der Zahnstange 21
- P: Druck

## Patentansprüche

1. Elektromechanischer Aktuator (1) für eine Scheibenbremse (2), insbesondere für eine Nutzfahrzeugscheibenbremse, mit einem Elektromotor (3) und einem Getriebe (3a) zum Erzeugen eines Antriebsmoments (M) und einer mit dem Elektromotor (3) wirkverbundenen rotatorisch beweglich gelagerten Betätigungswelle (23), wobei der elektromechanische Aktuator (1) entlang einer axialen Achse (A) ein mit der Betätigungswelle (23) wirkverbundenes Zahnstangengetriebe (20) zur Betätigung eines Drehhebels (5) der Scheibenbremse (2) aufweist, wobei das Zahnstangengetriebe (20) eine Zahnstange (21) und ein mit der Zahnstange (21) wirkverbundenden Antriebszahnrad (22) umfasst, **dadurch gekennzeichnet, dass** die Betätigungswelle (23), bezogen auf eine Antriebszahnradachse (AZ), versetzt an dem Antriebszahnrad (22) angeordnet ist.

2. Elektromechanischer Aktuator (1) nach Anspruch 1, **dadurch gekennzeichnet, dass** das Antriebszahnrad (22) in Richtung der Antriebszahnradachse (AZ) einen zylinderförmigen Durchgang 29 zur Aufnahme der Betätigungswelle (23) aufweist.

3. Elektromechanischer Aktuator (1) nach Anspruch 1 oder 2, **dadurch gekennzeichnet, dass** die Zahnstange (21), bezogen auf die axiale Achse (A), radial, auf der dem Antriebszahnrad (21) gegenüberliegenden Seite der Zahnstange (21) eine federbelastete Rolle (24) aufweist.

4. Elektromechanischer Aktuator (1) nach einem der Ansprüche 1 bis 3, **dadurch gekennzeichnet, dass** die Zahnstange (21), bezogen auf die axiale Achse (A), radial, auf der dem Antriebszahnrad (22) gegenüberliegenden Seite der Zahnstange (21) eine Stützrolle (25) aufweist und die Zahnstange (21) auf der dem Antriebszahnrad (22) gegenüberliegenden Seite der Zahnstange (21) eine Kurvenbahn (26) aufweist und die Stützrolle (24) sich entlang der Kurvenbahn (25) abstützt.

5. Elektromechanischer Aktuator (1) nach einem Ansprüche 1 bis 4, **dadurch gekennzeichnet, dass** das Antriebszahnrad (22) kreisförmig ausgebildet ist und in einem Verdrehwinkel von 30 Grad bis 300 Grad Zähne (27) aufweist.

6. Elektromechanischer Aktuator (1) nach Anspruch 5, **dadurch gekennzeichnet, dass** die Zähne (27) sägezahnförmig ausgebildet sind.

7. Elektromechanischer Aktuator (1) nach einem der Ansprüche 1 bis 6, **dadurch gekennzeichnet, dass** die Zahnstange (21) auf der Seite des Antriebszahnrads (22), entlang der axialen Achse (A), eine Verzahnung (28) aufweist und die Verzahnung (28) axial in Richtung des Drehhebels (5) konisch ausgebildet ist.

8. Elektromechanischer Aktuator (1) nach einem der Ansprüche 1 bis 7, **dadurch gekennzeichnet, dass** die Zahnstange (21) eine Aufnahme (29) zur Betätigung des Drehhebels (5) aufweist.

9. Elektromechanischer Aktuator (1) nach einem der Ansprüche 1 bis 8, **dadurch gekennzeichnet, dass** das Antriebszahnrad (22) dazu ausgebildet ist in einem Verdrehwinkel zwischen 0 Grad bis 60 Grad ein Lüftspiel der Scheibenbremse (2) zu überbrücken und in einem Winkel zwischen 30 Grad und 270 Grad eine Scheibenbremse zuzuspannen oder eine Scheibenbremse (2) in einem Winkel zwischen 60 Grad und 270 Grad in einer Parksperrposition zu halten

## Claims

1. An electromechanical actuator (1) for a disc brake (2), in particular for a commercial vehicle disc brake, having an electric motor (3), and a transmission (3a) for generating a drive torque (M) and a rotationally movable mounted actuating shaft (23) operatively connected to the electric motor (3), wherein the electromechanical actuator (1) has a rack and pinion gear (20) along an axial axle (A) operatively connected to the actuation shaft (23) for actuating a rotary lever (5) of the disc brake (2), wherein the rack and pinion gear (20) comprises a rack (21) and a pinion gear drive (22) operatively connected to the rack (21), **characterized in that** the actuation shaft (23), with respect to a pinion gear drive axle (AZ), is arranged offset on the pinion gear drive (22).

2. The electromechanical actuator (1) according to claim 1, **characterized in that** the pinion gear drive (22) has a cylindrical passage (29) for accommodating the actuation shaft (23) in the direction of the pinion gear drive axle (AZ).

3. The electromechanical actuator (1) according to claim 1 or 2, **characterized in that** the rack (21), with respect to the axial axle (A), radially, has a spring-loaded roller (24) on the side of the rack (21) opposite the pinion gear drive (22).

4. The electromechanical actuator (1) according to any of claims 1 to 3, **characterized in that** the rack (21), with respect to the axial axle (A), radially, has a support roller (25) on the side of the rack (21) opposite the pinion gear drive (22) and the rack (21) has a curved track (26) on the side of the rack (21) opposite the pinion gear drive (22) and the support roller (25) is supported along the curved track (26).

5. The electromechanical actuator (1) according to any of claims 1 to 4, **characterized in that** the pinion gear drive (22) is circular and has teeth (27) at a twist angle of 30 degrees to 300 degrees.

6. The electromechanical actuator (1) according to claim 5, **characterized in that** the teeth (27) are sawtooth-shaped.

7. The electromechanical actuator (1) according to any of claims 1 to 6, **characterized in that** the rack (21) has a toothing (28) on the side of the pinion gear drive (22), along the axial axis (A) and the toothing (28) is tapered axially in the direction of the rotary lever (5).

8. The electromechanical actuator (1) according to any of claims 1 to 7, **characterized in that** the rack (21) has a receptacle (29) for actuation of the rotary lever (5).

9. The electromechanical actuator (1) according to any of claims 1 to 8, **characterized in that** the pinion gear drive (22) is designed to bridge an air gap of the disc brake (2) at a twist angle between 0 degrees and 60 degrees and to apply a disc brake at an angle between 30 degrees and 270 degrees or to hold a disc brake (2) in a park locking position at an angle between 60 degrees and 270 degrees.

## Revendications

1. Actionneur électromécanique (1) pour un frein à disque (2), en particulier pour un frein à disque de véhicule utilitaire, avec un moteur électrique (3) et une transmission (3a) afin de produire un couple de traction (M) et un arbre de commande (23) monté en liaison mécanique et de façon mobile en rotation avec le moteur électrique (3), dans lequel l'actionneur électromécanique (1) présente, le long d'un axe axial (A), une transmission à crémaillère (20) en liaison mécanique avec l'arbre de commande (23) pour commander un levier rotatif (5) du frein à disque (2), dans lequel la transmission à crémaillère (20) comprend une crémaillère (21) et une roue dentée de commande (22) en liaison mécanique avec la crémaillère (21), **caractérisé en ce que** l'arbre de commande (23) est agencé, par rapport à un axe de roue dentée de commande (AZ), de façon décalée contre la roue dentée de commande (22).

2. Actionneur électromécanique (1) selon la revendication 1, **caractérisé en ce que** la roue dentée de commande (22) présente, dans la direction de l'axe de roue dentée de commande (AZ), un passage (29) cylindrique pour recevoir l'arbre de commande (23).

3. Actionneur électromécanique (1) selon la revendication 1 ou 2, **caractérisé en ce que** la crémaillère (21) présente radialement, par rapport à l'axe axial (A), sur le côté de la crémaillère (21) opposé à la roue dentée de commande (22), un galet (24) contraint par ressort.

4. Actionneur électromécanique (1) selon l'une des revendications 1 à 3, **caractérisé en ce que** la crémaillère (21) présente radialement, par rapport à l'axe axial (A), sur le côté de la crémaillère (21) opposé à la roue dentée de commande (22), un galet d'appui (25), et la crémaillère (21) présente, sur le côté de la crémaillère (21) opposé à la roue dentée de commande (22), une trajectoire courbe (26), et le galet d'appui (25) s'appuie le long de la trajectoire courbe (26).

5. Actionneur électromécanique (1) selon l'une des revendications 1 à 4, **caractérisé en ce que** la roue dentée de commande (22) est conçue de façon circulaire et présente des dents (27) dans un angle de torsion de 30 degrés à 300 degrés.

6. Actionneur électromécanique (1) selon la revendication 5, **caractérisé en ce que** les dents (27) sont conçues en dents de scie.

7. Actionneur électromécanique (1) selon l'une des revendications 1 à 6, **caractérisé en ce que** la crémaillère (21) présente une denture (28) sur le côté de la roue dentée de commande (22), le long de l'axe axial (A), et la denture (28) est axialement conçue de façon conique dans la direction du levier rotatif (5).

8. Actionneur électromécanique (1) selon l'une des revendications 1 à 7, **caractérisé en ce que** la crémaillère (21) présente une réception (29) pour la commande du levier rotatif (5).

9. Actionneur électromécanique (1) selon l'une des revendications 1 à 8, **caractérisé en ce que** la roue dentée de commande (22) est conçue pour combler un jeu du frein à disque (2) dans un angle de torsion entre 0 degré et 60 degrés, et serrer un frein à disque dans un angle entre 30 degrés et 270 degrés, ou maintenir un frein à disque (2) dans une position de verrouillage de stationnement dans un angle entre 60 degrés et 270 degrés.
